# EUROPEAN PATENT SPECIFICATION

(11) **EP 2 131 513 B1**
(45) Date of publication and mention of the grant of the patent: **01.12.2010**
(21) Application number: 08290512.6
(22) Date of filing: 02.06.2008
(51) Int. Cl.: H04J 14/02, H04J 3/22

(54) **Optical transmission in a multi-speed passive optical network**
Optische Übertragung in einem passiven optischen Netzwerk mit mehreren Geschwindigkeiten
Transmission optique dans un réseau optique passif multi-vitesse

(43) Date of publication of application: 09.12.2009
(73) Proprietor: Alcatel Lucent, 75008 Paris (FR)
(72) Inventor: Pfeiffer, Thomas, 70569 Stuttgart (DE); Poehlmann, Wolfgang, 71282 Hemmingen (DE); Jentsch, Lothar, 15370 Fredersdorf (DE); Krimmel, Heinz Georg, 70825 Korntal-Münchingen (DE)
(74) Representative: Schmidt, Werner Karl

(56) References cited:
- JP-A- 8 008 954
- US-A1- 2002 063 924
- MAREK HAJDUCZENIA ET AL: "10G EPON Standardization in IEEE 802.3av Project" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-9, XP031256859 ISBN: 978-1-55752-856-8
- JONG HOON LEE ET AL: "A Remotely Reconfigurable Remote Node for Next-Generation Access Networks" IEEE PHOTONICS TECHNOLOGY LETTERS, IEEE SERVICE CENTER, PISCATAWAY, NJ, US, vol. 19, no. 11, 1 June 2008 (2008-06-01), pages 915-917, XP011214473 ISSN: 1041-1135

## Description

### Background of the Invention

The invention relates to a method for performing optical transmission in a passive optical network, PON, the method comprising: transmitting a wavelength-multiplexed optical signal comprising a first discrete-level optical signal having a first wavelength at a legacy bit rate and a second discrete-level optical signal having a second wavelength at an advanced bit rate through the PON. The invention also relates to a PON having a tree-like structure with a main line and a plurality of branches, comprising: an optical multiplexer for generating a wavelength-multiplexed optical signal by combining the first and second discrete-level signals, at least one legacy receiver adapted to recover data contained in the first discrete-level signal, and at least one advanced receiver adapted to recover data contained in the second discrete-level signal.

Passive optical networks (PONs) are optical access networks for exchanging optical signals between a central station, commonly referred to as Optical Line Termination (OLT) and a plurality of subscriber stations, usually referred to as Optical Network Terminations (ONTs) or Optical Network Units (ONUs) both in an upstream and downstream direction. Although transmission of discrete-level signals having more than two levels may be performed in a PON, usually only two-level signals, i.e. binary modulated signals are used for the transmission.

Upgrading an already deployed PON by increasing the speed of the downstream transmission of binary signals from the OLT to the ONTs from a first bit rate (e.g. 1.25 Gbit/s) to a higher bit rate (e.g. 10 Gbit/s or 10.3 Gbit/s) is rather difficult, the reason being as follows: Although the network operator can easily replace a legacy OLT which is not capable of performing downstream transmission at the higher bit rate by an advanced OLT, not all of the legacy ONTs which cannot process signals with the higher bit rate can be replaced at the same time for economical reasons, as several tens to hundreds of ONTs may be connected to the same OLT.

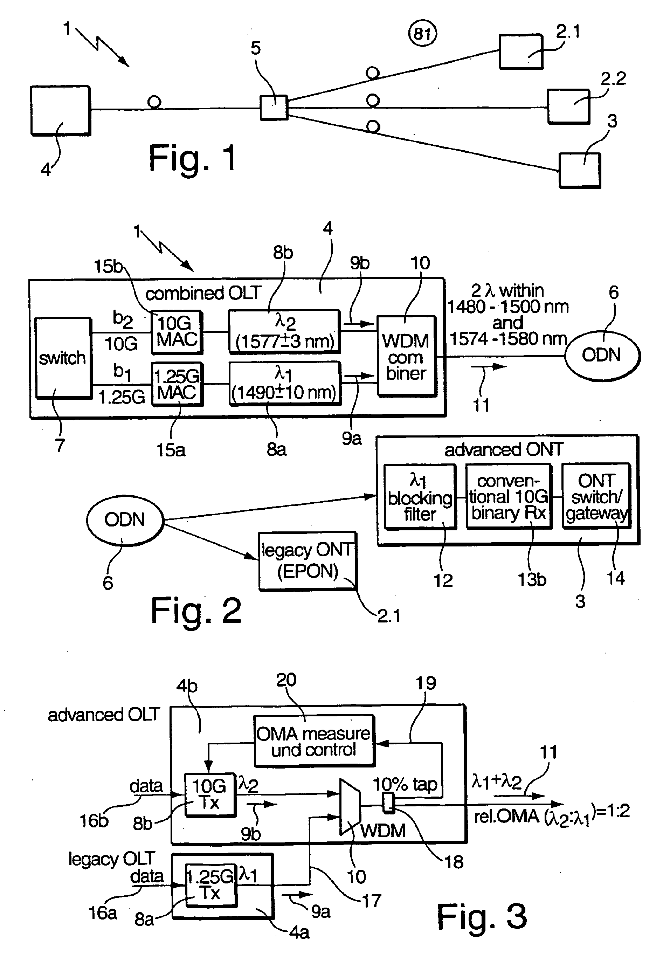

Therefore, a considerable number of legacy ONTs **2.1, 2.2** may be present together with some updated or advanced ONTs **3** in a PON **1** after such a network upgrade (see **Fig. 1**). An OLT **4** of the PON 1 which is connected to both types of optical network terminations 2.1, 2.2, 3 via a passive splitter **5** must then be adapted to transmit downstream signals which can be received and processed by both the legacy ONTs 2.1, 2.2 and the advanced ONTs 3. This can be achieved either by dividing the downstream transmission time into first time intervals during which data is transmitted at the high bit rate, the first time intervals alternating with second time intervals which are reserved for the transmission of data at the lower bit rate, or by transmitting data both at the high and the low bit rate concurrently. In any case, as signals of two different signal speeds are present in such a PON, the latter is referred to as a multi-speed PON, more particularly as a dual-speed PON.

In the IEEE 802.3av (10 Gbit/s EPON) standard (M. Hajduczenia et Al.: "10G EPON Standardization in IEEE 802.3av Project", OFC/NFOEC, 2008, Conference on, IEEE, Piscataway, NJ, USA, 24 February 2008, pp. 1-9), the upgrading problem is solved by using a wavelength-multiptexed signal for the downstream transmission which comprises two discrete-level signals having two different wavelengths, the first one being transmitted at the legacy bit rate, the second one being transmitted at the advanced bit rate. For recovering the first and second optical signals from the wavelength-multiplexed signal, wavelength-selective optical filters are arranged in the legacy ONTs and the advanced ONTs for blocking the wavelength of the advanced signal and the wavelength of the legacy signal, respectively. In such a way, only the legacy / advanced signal is fed to the legacy / advanced receiver of the legacy / advanced ONT for performing the o/e-conversion. However, when performing optical transmission in the way described above, there arises the problem that an additional wavelength-selective optical filter must be deployed in the legacy ONTs, which is difficult to accomplish due to the fact that unlike the advanced ONTs, the legacy ONTs are deployed at remote locations of the PON and are therefore not easily accessible.

Another way of performing downstream transmission in a multi-speed PON which has recently been developed is to transmit a downstream signal having a single wavelength to both the legacy and to the advanced ONTs. In this case, however, as the legacy ONTs are usually not capable to recover the clock from a binary signal transmitted with the higher bit rate, the OLT must provide downstream signals which allow the legacy ONTs to perform their clock recovery even during time intervals when only data at the higher bit rate is transmitted. One advantageous way to generate such a downstream signal is to combine (add up) the amplitudes of two discrete-level signals, one with the legacy and the other with the advanced bit rate in the electrical domain to form a so-called bit-stacked signal in the OLT which is then transmitted to both the legacy and advanced ONTs. As a constant phase relationship between both signals can be chosen and the phase relationship is not altered due to the transmission of both signals at the same wavelength and by proper adjustment of the relative modulation amplitudes of the tributary signals, the data from the legacy / advanced signal may be easily recovered in the legacy / advanced ONTs.

The article by Jong Hoon Lee et al. "A Remotely Reconfigurable Remote Node for Next-Generation Access Networks", IEEE Photonics Technology Letters, IEEE Service Center, Piscataway, NJ, US, vol. 19, no. 11, 1 June 2008, pp. 915-917 describes a remotely reconfigurable remote node (RN) for next-generation (NG) access networks, the RN being remotely reconfigured by instantaneous optical powering at the central office through feeder fiber and maintained in a passive state by employing optical latching switches (OLSs). The feasibility of the proposed RN is demonstrated by investigating the operating conditions of optical powering for the reconfiguration and its nonlinear effect both for timed-division-multiplexing passive optical network (TDM-PON) as legacy services and wavelength-division-multiplexing passive optical network (WDM-PON) as NG services. The existence of OLSs for reconfigurability and crosstalk effect between TDM-PON and WDM-PON are negligible on transmission performance.

US 2002/0063924 A1 discloses a Fiber-to-the-Home multi-media access system and method in which voice, video and data signals are transported over a PON between a central office location and a plurality of subscriber home network units (HNUs). Optical multiplexing/demultiplexing circuitry at the central office location combines the video signals which are operating at one optical wavelength, with the telephony/data signals, which are operating at a second, distinct optical wavelength. These combined signals are then transported over the PON to the HNUs. The HNUs receive the combined optical signals, demultiplex and convert the optical signals into corresponding electrical signals, which are in turn coupled through the HNU to the video, data and telephony networks within the home.

In JP 08 008954 A, multi-rate burst circuits are added to a low speed PON system to introduce high speed communication service to the system. A signal is received by the circuits through high speed signal interface circuits. An input high speed signal is set higher that the transmission speed of the low speed PON system in the circuits and outputted from the circuits at a position of a time slot to be represented by control signals from TDMA circuits. Furthermore, the low and high speed signals are multi-burst signals by using OR gates or the like and are converted into optical signals by optical transmitters and they are outputted to an optical fiber.

### Object of the Invention

It is the object of the invention to provide: a method for performing optical transmission in a multi-speed PON, as well as a multi-speed PON, both allowing one to simplify the recovery of data contained in a wavelength-multiplexed optical signal transmitted to both legacy and advanced receivers.

### Summary of the Invention

This object is achieved by a method as described in the introduction, further comprising: feeding the wavelength-multiplexed optical signal comprising the first and second discrete-level optical signals to an o/e-conversion element of a legacy receiver of the PON, the optical power of the first discrete-level optical signal being chosen to be larger than the optical power of the second discrete-level optical signal, so that, for recovering the data contained in the first discrete-level optical signal in the legacy receiver, the sum signal comprises an amplitude range in which only transitions generated by the first discrete-level optical signal are present.

The inventors have found that when feeding a wavelength-multiplexed optical signals having two different wavelengths to an o/e-conversion element without optical filtering, the legacy receiver may recover the data contained in the low-speed signal provided that the optical power ratio of the first and second discrete-level signals is adjusted in an adequate way. This is possible as the o/e-conversion elements, especially photodiodes, which are commonly used in the optical receivers of legacy ONTs automatically combine the optical powers of two or more signals having different wavelengths, resulting in an o/e-converted signal in which the o/e-converted optical powers of the first and second optical signals are added up. The clock-data recovery of the legacy receiver which is performed at the legacy bit rate may then recover the data contained in the first discrete-level optical signal from the sum signal in the usual way, as the clock-data recovery of the legacy receiver typically adapts the slicing level of the clock recovery to the average level of its input signal, at which level only transitions at the legacy bit rate are present provided that a suitable relative amplitude of the two discrete-level optical signals is chosen. In such a way, no deployment of a wavelength-selective filter at the input to the legacy receiver is required, thus considerably reducing the expenses for upgrading of the PON. In particular, when the legacy receiver is arranged in legacy ONTs, the latter may recover the data of the first discrete-level signal without further modification.

Typically, the optical modulation amplitude (OMA) of the first optical signal has to be chosen to be larger than the OMA of the second optical signal. The OMA is defined as the difference between the minimum and maximum power levels of the discrete-level signals. A suitable choice of the OMA is needed for recovering the data contained in the first discrete-level signal without interference being caused by the second discrete-level signal. Such interferences are avoided when the OMA of the first discrete-level signal is chosen to be larger than that of the second discrete-level signal, as will be explained in greater detail below. The person skilled in the art will appreciate that an appropriate adjustment of the optical amplitude ratio may be achieved also in another way, e.g. by choosing a mean optical power of the first discrete-level optical signal to be larger than a mean optical power of the second discrete-level optical signal. In any case, the sum signal should comprise an amplitude range in which only transitions generated by the first discrete-level optical signal are present, such that the clock recovery may be performed.

In a preferred variant, the method further comprises: recovering the data contained in the second discrete-level optical signal from the wavelength-multiplexed optical signal in an advanced receiver by blocking the first discrete-level optical signal using a wavelength-selective optical filter. As the phase relationship between the signal at the advanced bit rate and the signal at the legacy bit rate is destroyed by the fiber chromatic dispersion of the fiber plant (e.g. 20 km or more), the possibility to recover the data of the discrete-level signal transmitted at the advanced speed directly from the multi-speed signal is lost. Therefore, it is proposed to strip the disturbing first discrete-level signal at the legacy bit rate by optical filtering and thus removing the detrimental signal portion, which leaves only the second signal at the advanced speed which is then fed to the o/e-conversion element of the advanced receiver.

In a preferred variant, the legacy receiver is arranged in a legacy optical network termination, ONT, for recovering data contained in the first discrete-level optical signal transmitted from an optical line termination, OLT, and the advanced receiver is arranged in an advanced ONT for recovering data contained in the second discrete-level signal transmitted from the OLT. When performing the downstream transmission in the PON in such a way, modifications to the legacy ONTs distributed within the PON may be avoided.

In yet another preferred variant, the legacy receiver is arranged in the OLT for recovering data contained in the first discrete-level optical signal transmitted from a legacy ONT, and the advanced receiver is also arranged in the OLT for recovering data contained in the second discrete-level optical signal transmitted from an advanced ONT. In this way, upstream transmission in the PON may be optimized, as deploying an optical filter at an input to the legacy receiver of the OLT may be dispensed with. It will be understood that additionally, also the downstream transmission may be optimized in the way described above.

In a preferred variant, in downstream, the first wavelength is chosen from a legacy wavelength range between 1480 nm and 1500 nm, and the second wavelength is chosen from an advanced wavelength range between 1574 nm and 1580 nm. By providing a sufficient separation between the first and second wavelength, interference effects between the signals can be avoided. Moreover, the filter slope of the wavelength-selective optical filter in the advanced receiver can be reduced, thus allowing reducing expenses. Nevertheless, also other, more dense, wavelength separations may be chosen without modifying the basic approach. In particular, Dense Wavelength Division Multiplexing (DWDM)-like wavelength allocation can be applied for transmitting both discrete-level signals within a common wavelength range, e.g. a common CWDM band. Furthermore, the wavelength ranges are chosen in order to ensure that conversion of their optical powers in the ole-conversion element can be performed without distortions due to a modification of the relation of the electrical voltages of the first and second discrete-level signals after the conversion as compared to the relation of their optical powers before the conversion.

In a further preferred variant, the method comprises: generating the first discrete-level optical signal by performing binary modulation of a first e/o-conversion element at the legacy bit rate, and generating the second discrete-level optical signal by performing binary modulation of a second e/o-conversion element at the advanced bit rate, an optical amplitude of the first optical signal being chosen to be larger than an optical amplitude of the second optical signal so that the sum signal comprises an amplitude range in which only transitions generated by the first discrete-level optical signal are present. As an e/o-conversion element, typically a laser or laser diode is used which is modulated by application of a binary data signal. However, for the generation of the optical signal at the advanced bit rate, a separate optical modulator such as a Mach-Zehnder modulator or an absorption modulator may be required. In any case, the two different-speed data streams are kept in separate lanes and are eventually e/o-converted by separate lasers, which allows one to avoid the handling of multi-level signals in the transmitter, and especially the advanced receivers. When wavelength division multiplexed (WDM) upstream signaling is implemented using time-division multiple access (TDMA) per wavelength, this offers the opportunity to have completely independent MACs (multiple access controls) for the legacy and for the advanced ONTs.

A further aspect of the invention is implemented in a PON as described in the introduction, wherein the legacy receiver is adapted to feed the wavelength-multiplexed optical signal comprising the first and second discrete-level optical signals to an o/e-conversion element, an optical power of the first discrete-level optical signal being selected to be larger than an optical power of the second discrete-level optical signal, so that, for recovering the data contained in the first discrete-level optical signal in the legacy receiver, the sum signal comprises an amplitude range in which only transitions generated by the first discrete-level optical signal are present. As described in detail above, in such a multi-speed PON, the legacy receiver(s) do not have to be modified for recovering data contained in the optical signal transmitted at the legacy speed.

In a preferred embodiment, the legacy receiver further comprises a clock-data recovery unit operated at the legacy bit rate for recovering the data contained in the first discrete-level signal from the multi-speed, multi-level signal. The clock-data recovery typically has its slicing level at the average level of the o/e-converted multi-level signal, such that the clock of the first discrete-level signal may be recovered from the sum signal and the bit recovery time may be adjusted at an appropriate location in-between the transitions of the first discrete-level signal.

In another preferred embodiment, the PON comprises a wavelength-selective optical filter for blocking the first discrete-level optical signal before recovering data contained in the second discrete-level optical signal in the advanced receiver. In such a way, the advanced receiver can recover the data contained in the second discrete-level signal without having to deal with distortions caused by the first discrete-level signal.

In a further preferred embodiment the legacy receiver is arranged in a legacy optical network termination, ONT, for recovering data contained in the first discrete-level optical signal transmitted from an optical line termination, OLT, and the advanced receiver is arranged in an advanced ONT for recovering data contained in the second discrete-level signal transmitted from the OLT. In such a way, downstream transmission in a multi-speed PON may be performed without having to modify the legacy ONTs already deployed in the PON.

In another preferred embodiment, the legacy receiver is arranged in the OLT for recovering data contained in the first discrete-level optical signal transmitted from a legacy ONT, and the advanced receiver is also arranged in the OLT for recovering data contained in the second discrete-level optical signal transmitted from an advanced ONT. This allows to perform upstream transmission in the PON at different wavelengths without having to deploy an optical filter for the legacy receiver.

In a preferred embodiment, the PON further comprises: a first e/o-conversion element for generating the first discrete-level optical signal by binary modulation of the first e/o-conversion element at the legacy bit rate, and a second e/o-conversion element for generating the second discrete-level optical signal by binary modulation of the second e/o-conversion element at the advanced bit rate, an optical (modulation) amplitude of the first discrete-level signal being larger than an optical (modulation) amplitude of the second discrete-level signal so that the sum signal comprises an amplitude range in which only transitions generated by the first discrete-level optical signal are present. The first and especially the second e/o-conversion elements may be deployed as laser arrangements, comprising either a single laser or a laser with an optical modulator such as an absorption modulator or a Mach-Zehnder modulator. In any case, the optical modulation ratio of the first and second binary signals may be adjusted at an appropriate level, e.g. at a ratio of 2 : 1.

In a highly preferred embodiment, the OLT comprises the second o/e-conversion element and is arranged as an in-line element in a fiber line from a legacy OLT which comprises the first o/e-conversion element, the OLT further comprising a control unit for adjusting the optical amplitude ratio of the first and second discrete-level optical signals so that the sum signal comprises an amplitude range in which only transitions generated by the first discrete-level optical signal are present. In such a way, the OLT of the multi-speed PON is split into two parts, one for the legacy downstream speed (e.g. 1.25 Gbit/s EPON) and one for the advanced speed (e.g. 10 Gbit/s-EPON), thus avoiding to have to replace the legacy OLT. As the modulation power of the optical signal generated by the legacy OLT typically cannot be controlled by the advanced OLT, a control loop is advantageous in order to ensure that the modulation power of the advanced optical signal can always be kept smaller than the modulation power of the optical signal from the legacy OLT, thus allowing recovering the data contained in the first discrete-level signal in the legacy ONT without having to deal with interference caused by the second discrete-level signal.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of a multi-speed PON,
- **Fig. 2**: shows an embodiment of a multi-speed PON according to the invention,
- **Fig. 3**: shows an alternative implementation of an OLT for the PON of Fig. 2,
- **Fig. 4a,b**: shows the PON of Fig. 2 together with eye diagrams of the electrical and optical signals involved in the downstream transmission (a) and the upstream transmission (b), and
- **Figs. 5a-d**: show eye diagrams of the first and the second binary-level signal before the summation (a, b) and the resulting sum signal after the summation in the photodiode of the legacy receiver (c, d).

### Detailed Description of Preferred Embodiments

The upper part of **Fig. 2** shows the OLT 4 in the main line of the dual-speed PON 1 of Fig. 1, the lower part represents branches of the PON 1 with one of the legacy ONTs 2.1 and with the advanced ONT 3. The portions of the PON 1 in the upper and lower part of Fig. 2 are connected by an optical distribution network **6** of the PON 1 which in the most simple case may be implemented as the single passive optical splitter 5 of Fig. 1.

In the OLT 4, a switch **7** is provided for separating binary data into two parallel paths for providing data at a legacy bit rate **b₁** of 1.25 Gbit/s to a first e/o-conversion element **8a** in the form of a first laser arrangement and data at an advanced bit rate **b₂** of 10.0 Gbit/s to a second e/o-conversion element **8b** in the form of a second laser arrangement. The first laser arrangement comprises a laser diode which is modulated at the legacy bit rate b₁ of 1.25 Gbit/s, thus generating a first binary signal **9a** at a first wavelength λ**₁** which is selected from a range in between 1480 nm and 1500 nm. A second binary signal **9b** is generated in the second laser arrangement 8b with a second wavelength λ**₂,** being selected from a range between 1574 nm and 1580 nm. The laser arrangement 8b also comprises an optical modulator such as an absorption modulator or a Mach-Zehnder modulator which is modulated at the advanced bit rate of 10 Gbit/s for forming the second binary signal 9b at the advanced speed. The first and second optical signals 9a, 9b are then combined in an optical wavelength division multiplexer **10** to form a wavelength-multiplexed signal **11** which is subsequently transmitted to both the legacy ONT 2.1 and to the advanced ONT 3 via the distribution network 6.

For recovering the data contained in the second binary signal 9b in the advanced ONT 3, the wavelength-multiplexed signal 11 is first fed to a wavelength-selective optical filter **12** which is adapted to block signals at the first wavelength λ₁. In such a way, only the second binary signal 9b at the second wavelength λ₂ is fed to an advanced receiver **13b** which performs an o/e-conversion and recovering the binary data contained therein. The recovered data is then provided to a gateway **14** of the advanced ONT 3 for further processing. In contrast to the process for recovering the data contained in the second binary signal 9b described above, no optical filtering is required for the recovery of the data contained in the first binary signal 9a in the legacy ONT 2.1, as will be described in greater detail further below.

By using two separate o/e-conversion elements 8a, 8b in the OLT 4, the legacy and advanced data streams are kept in separate lanes, such that, when wavelength division multiplexed upstream signaling is implemented, two completely independent MAC (multiple access control) units **15a, 15b,** one for the legacy ONTs 2.1, 2.2 and the other one for the advanced ONT(s) 3 may be deployed in the OLT 4.

In **Fig. 3****,** an alternative way of generating the wavelength-multiplexed signal 11 is shown, using a legacy OLT **4a** and an advanced OLT **4b.** The legacy OLT 4a is fed with a first data signal **16a** at the legacy bit rate of 1.25 Gbit/s and comprises a first e/o-conversion element 8a for generating the first binary optical signal 9a at the first wavelength λ₁. The first binary optical signal 9a is then transmitted via a fiber line **17** to the advanced OLT 4b which comprises a second e/o-conversion element 8b for generating the second binary optical signal 9b using a binary modulation of a second data signal **16b** at the advanced bit rate of 10 Gbit/s. Both optical signals 9a, 9b are then combined in an optical multiplexer 10 of the advanced OLT 4b to form the wavelength-multiplexed signal 11. In the way described in Fig. 3, the legacy OLT 4a need not be modified and the advanced OLT 4b may be inserted into the main fiber line or into a branch of the PON 1, thus forming a dual-speed PON only between the location of the advanced OLT 4b and the (advanced / legacy) ONTs arranged downstream of the advanced OLT 4b.

The advanced OLT 4b also comprises a tap coupler **18** for branching part of the wavelength-multiplexed signal 11 to a feedback loop **19** which comprises a control unit **20** for measuring the optical power of the constituents of the wavelength-multiplexed signal 11 and for controlling the optical modulation amplitude of the second e/o-converter 8b in order to reach a desired optical modulation ratio between the modulated powers of the first and second signals 9a, 9b, respectively. As an alternative solution, an optical amplifier with adjustable gain inserted into the fiber 17 may be used adjust the legacy signal power to the desired value, thus compensating also for the reduced effective modulation amplitude of the legacy signal in the wavelength-multiplexed signal.

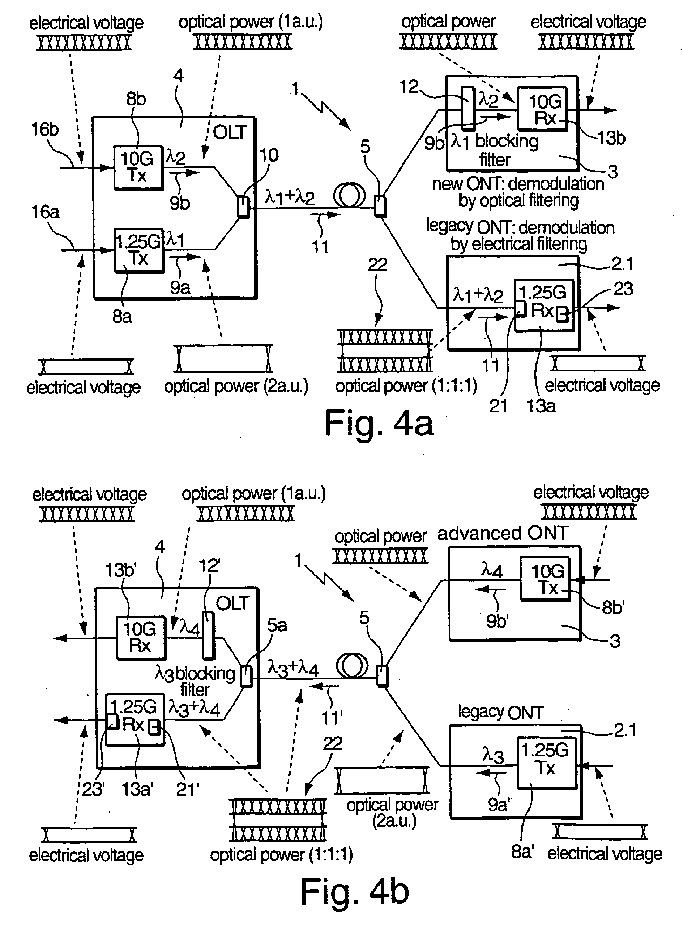

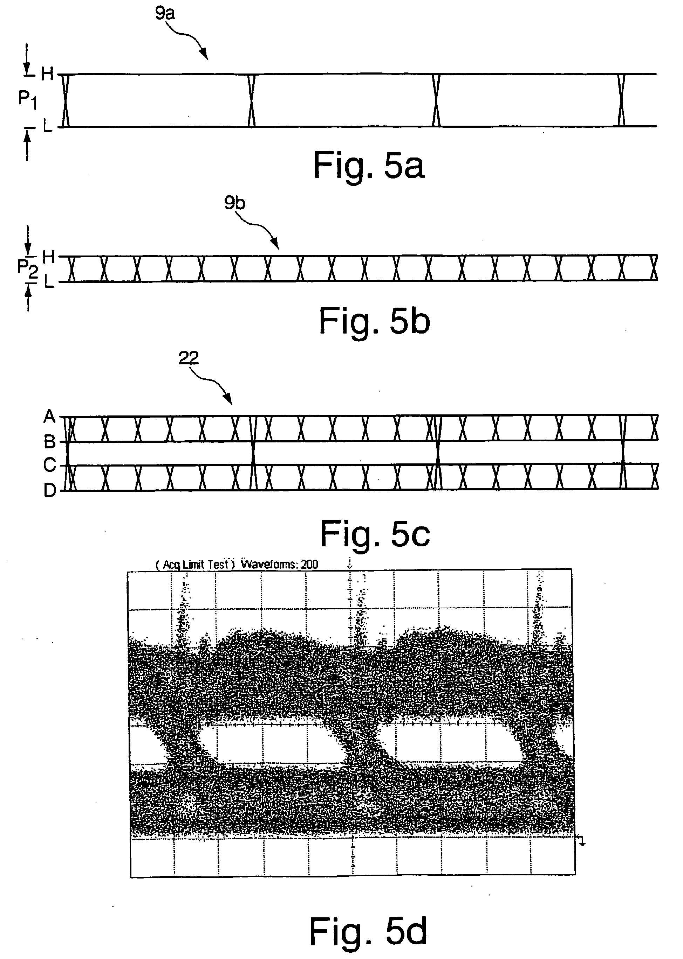

**Fig. 4a** shows the PON 1 of Fig. 2 together with eye diagrams representing transitions between the discrete levels for the electrical and optical signals 16a, 16b, 9a, 9b, 11 involved in the downstream transmission. The first and second data signals 16a, 16b with bit rates b₁ and b₂ have an identical modulated amplitude between their high and low level voltages. The e/o-conversion element 8b is modulated with the second data signal 16b to form the second binary signal 9b with a modulated optical power **P₂** which essentially corresponds to the electrical modulation amplitude of the second data signal 16b between the high and low level amplitudes H, L, see also **Fig. 5b****.** The first e/o-conversion element 8a, on the contrary, is adapted to provide a first binary optical signal 9a which has a modulated optical power **P₁** which is two times the modulated optical power P₂ of the second binary optical signal 9b, see also Fig. **5a****.** As is also shown in Fig. 4, the resulting multiplexed signal 11 is fed to a wavelength-selective filter 12 of the advanced ONT 3 which removes the first optical signal 9a from the multiplexed signal 11 such that only the second optical signal 9b is fed to the advanced receiver 13b for recovering the data signal 16b at the advanced bit rate b2.

In contrast thereto, the wavelength-multiplexed signal 11 is fed directly, i.e. without optical filtering, to a legacy receiver **13a** of the legacy ONT 2.1. The legacy receiver 13a comprises a photodiode **21** as an o/e-conversion element which performs a summation of the optical powers P₁, P₂ of the first and second binary optical signals 9a, 9b of the wavelength-multiplexed signal 11, resulting in a multi-speed, four-level signal **22,** also being referred to as a sum signal in the following, a schematic eye diagram of which is shown in **Fig. 5c****,** an eye diagram obtained by measurement being represented in **Fig. 5d****.** As is also shown in Fig. 5c, the sum signal 22 of the present example comprises four equidistant amplitude levels **A** to **D,** the second binary signal 9b corresponding to a first sub-eye pattern of transitions between the first amplitude level A and the second amplitude level B, as well as by a second sub-eye pattern with transitions between the third amplitude level C and the fourth amplitude level D in the diagram shown in Fig. 5c. In contrast thereto, the first binary signal 9a induces transitions from the first and second levels A, B to the third and fourth levels C, D at the legacy bit rate b₁. From Fig. 5c it can also be seen that the transitions induced by the first binary modulated signal 9a are in general shifted in time with respect to the transitions induced by the second binary modulated signal 9b due to chromatic dispersion of the wavelengths in the fiber link from the OLT 4 to the legacy ONT 2.1. The person skilled in the art will appreciate that in case that the advanced bit rate b₂ (e.g. 10.3 Gbit/s) is no integer multiple of the legacy bit rate b₁ (e.g. 1.25 Gbit/s), the transitions of the first and second binary modulated optical signals 9a, 9b are always shifted in time with respect to each other, irrespective of the dispersion induced by the fiber link.

For recovering the data contained in the first binary signal 9a from the sum signal 22, a clock-data recovery unit **23** is arranged in the legacy ONT 2.1, performing a clock-data recovery at the legacy bit rate b₁ in the usual way, i.e. by synchronizing its clock to transitions induced by the first binary signal 9a in the eye diagram of Fig. 5c. For this purpose, a slicing level of the clock-data recovery unit 23 is set at the average amplitude level of the sum signal 22, i.e. on a mid-level between the second and third amplitude levels B, C. In such a way, the data contained in the first binary signal 9a can be recovered from the sum signal 23 despite interference due to the second binary signal 9b.

What may also be gathered from Fig. 5c is the fact that a higher optical modulation amplitude P₁ of the first binary signal 9a as compared to the modulation amplitude P₂ of the second binary signal 9b is required for recovering the clock and the data of the first binary signal 9a from the sum signal 22 despite interference being caused by the second binary signal 9b, as only in this case the first two levels A, B of the eye diagram of the sum signal 22 are spaced apart from the third and fourth amplitude levels C, D, thus ensuring that an adequate amplitude level for the clock recovery can be found.

In the way described above, the downstream transmission in the PON 1 can be optimized. However, also the upstream transmission in the PON 1 may be optimized by applying the same principle as described above and reversing the role of the ONT 4 and the OLTs 2.1, 3 in the transmission, as shown in **Fig. 4b****.** In this case, the legacy receiver **13a'** is arranged in the OLT 4 for recovering data contained in a first binary modulated optical signal **9a'** having a first wavelength λ**₃** transmitted from a legacy transmitter **8a'** of the legacy ONT 2.1. An advanced receiver **13b'** is also arranged in the OLT 4 for recovering data contained in a second binary modulated optical upstream signal **9b'** having a second wavelength λ**₄** being transmitted from an optical transmitter **8b'** of the advanced ONT 3. It will be understood that in general, the first and second wavelengths λ₃, λ₄ of the upstream transmission shown in Fig. 4b do not coincide with the first and second wavelengths λ₃, λ₄ of the downstream transmission shown in Fig. 4a.

The first and second binary signals 9a', 9b' are combined in the passive optical splitter 5 to form a wavelength-multiplexed upstream signal **11'** which is fed to an optical splitter **5a** arranged in the OLT 4. In the path from the optical splitter 5a to the advanced receiver 13b', an optical filter **12'** is arranged which removes the first binary upstream signal 9a' from the wavelength-multiplexed signal 11' such that data contained therein can be recovered by the advanced receiver 13b'. In contrast thereto, the wavelength-multiplexed signal 11' is fed without optical filtering to a photodiode **21'** of the legacy receiver 13a', a clock-data recovery circuit **23'** recovering the data contained in the first binary signal 9a' in a similar way as in the legacy receiver 13a described with reference to Fig. **4a****,** yet using burst-mode operation in the TDMA scheme.

The person skilled in the art will appreciate that although in the above description downstream transmission has been described with respect to binary signals, performing transmission of discrete-level signals having more than two levels which may result in forming multi-level sum signals with more than four amplitude levels constitutes a straightforward generalization of the concepts described herein.

In summary, in the way described above, seamless upgrade of PON-type access networks performing transmission with two concurrent bit rates is possible by using binary-type modulated lasers and binary-type advanced optical receivers. Furthermore, the advanced wavelength of the advanced (single-speed) PON can be applied from the very beginning during the transition period and any dependency from blocking filters in legacy optical receivers can be removed, thus avoiding deployment of distributed wavelength blocking filters during PON upgrades. In such a way, the legacy ONTs can be upgraded at a later stage without having to remove previously installed blocking filters. Moreover, advanced (high-speed) transmitters and receivers are simplified since no multi-level signal has to be processed and components in conformance with the high-speed standard can be utilized in a dual-speed network.

The above description of the preferred embodiments has been given by way of example. From the disclosure given, those skilled in the art will not only understand the present invention and its attendant advantages, but will also find apparent various changes and modifications to the structures and methods disclosed.

## Claims

1. Method for performing optical transmission in a passive optical network, PON (1), the method comprising:
transmitting a wavelength-multiplexed optical signal (11, 11') comprising a first discrete-level optical signal (9a) having a first wavelength (λ₁, λ₃) at a legacy bit rate (b₁) and a second discrete-level optical signal (9b) having a second wavelength (λ₂, λ₄) at an advanced bit rate (b₂) through the PON (1),
**characterized by**
feeding the wavelength-multiplexed optical signal (11, 11') comprising the first and second discrete-level optical signals (9a, 9b; 9a', 9b') to an o/e-conversion element (21, 21') of a legacy receiver (13a, 13a') of the PON (1), the optical power (P₁) of the first discrete-level optical signal (9a, 9a') being chosen to be larger than the optical power (P₂) of the second discrete-level optical signal (9b, 9b') so that, for recovering the data contained in the first discrete-level optical signal (9a, 9a') in the legacy receiver (13a, 13a'), the sum signal (22) comprises an amplitude range in which only transitions generated by the first discrete-level optical signal (9a, 9a') are present.

2. Method according to claim 1, further comprising: recovering data contained in the second discrete-level optical signal (9b, 9b') from the wavelength-multiplexed optical signal (11, 11') in an advanced receiver (13b, 13b') by blocking the first discrete-level optical signal (9a, 9a') using a wavelength-selective optical filter (12, 12').

3. Method according to claim 2, wherein the legacy receiver (13a) is arranged in a legacy optical network termination, ONT, (2.1) for recovering data contained in the first discrete-level optical signal (9a) transmitted from an optical line termination, OLT, (4), and the advanced receiver (13b) is arranged in an advanced ONT (3) for recovering data contained in the second discrete-level signal (9b) transmitted from the OLT (4).

4. Method according to claim 2, wherein the legacy receiver (13a') is arranged in the OLT (4) for recovering data contained in the first discrete-level optical signal (9a') transmitted from a legacy ONT (2.1), and the advanced receiver (13b') is also arranged in the OLT (4) for recovering data contained in the second discrete-level optical signal (9b') transmitted from an advanced ONT (3).

5. Method according to claim 1, wherein the first wavelength (λ₁) is chosen from a legacy wavelength range between 1480 nm and 1500 nm, and the second wavelength (λ₂) is chosen from an advanced wavelength range between 1574 nm and 1580 nm.

6. Method according to claim 1, further comprising:
generating the first discrete-level optical signal (9a, 9a') by performing binary modulation of a first e/o-conversion element (8a, 8a') at the legacy bit rate (b₁), and
generating the second discrete-level optical signal (9b, 9b') by performing binary modulation of a second e/o-conversion element (8b, 8b') at the advanced bit rate (b₂), an optical amplitude (P₁) of the first discrete-level optical signal (9a, 9a') being chosen to be larger than an optical amplitude (P₂) of the second discrete-level optical signal (9b, 9b') so that the sum signal (22) comprises an amplitude range in which only transitions generated by the first discrete-level optical signal (9a, 9a') are present.

7. Passive optical network, PON (1), having a tree-like structure, comprising:
an optical multiplexer (10, 5) for generating a wavelength-multiplexed optical signal (11, 11') by combining a first discrete-level optical signal (9a, 9a') at a first wavelength (λ₁, λ₃) having a legacy bit rate (b₁) and a second discrete-level optical signal (9b) at a second wavelength (λ₂. λ₄) having an advanced bit rate (b₂),
at least one legacy receiver (13a, 13a') adapted to recover data contained in the first discrete-level signal (9a, 9a'), and
at least one advanced receiver (13b, 13b') adapted to recover data contained in the second discrete-level signal (9b, 9b'),
**characterized in that**
the legacy receiver (13a, 13a') is adapted to feed the wavelength-multiplexed optical signal (11, 11') comprising the first and second discrete-level optical signals (9a, 9b; 9a', 9b') to an o/e-conversion element (21, 21'), an optical power (P₁) of the first discrete-level optical signal (9a, 9a') being selected to be larger than an optical power (P₂) of the second discrete-level optical signal (9b, 9b') so that, for recovering the data contained in the first discrete-level optical signal (9a, 9a') in the legacy receiver (13a, 13a'), the sum signal (22) comprises an amplitude range in which only transitions generated by the first discrete-level optical signal (9a, 9a') are present.

8. PON according to claim 7, wherein the legacy receiver (13a, 13a') further comprises a clock-data recovery unit (23, 23') operated at the legacy bit rate (b₁) for recovering the data contained in the first discrete-level signal (9a, 9a').

9. PON according to claim 7, further comprising a wavelength-selective optical filter (12, 12') for blocking the first discrete-level optical signal (9a, 9a') before recovering the data contained in the second discrete-level signal (9b, 9b') in the advanced receiver (13b).

10. PON according to claim 7, wherein the legacy receiver (13a) is arranged in a legacy optical network termination, ONT, (2.1) for recovering data contained in the first discrete-level optical signal (9a) transmitted from an optical line termination, OLT, (4), and the advanced receiver (13b) is arranged in an advanced ONT (3) for recovering data contained in the second discrete-level signal (9b) transmitted from the OLT (4).

11. PON according to claim 7, wherein the legacy receiver (13a') is arranged in the OLT (4) for recovering data contained in the first discrete-level optical signal (9a') transmitted from a legacy ONT (2.1), and the advanced receiver (13b') is also arranged in the OLT (4) for recovering data contained in the second discrete-level optical signal (9b') transmitted from an advanced ONT (3).

12. PON according to claim 7, further comprising:
a first e/o-conversion element (8a, 8a') for generating the first discrete-level optical signal (9a, 9a') by binary modulation of the first e/o-conversion element (8a, 8a') at the legacy bit rate (b₁), and
a second e/o-conversion element (8b, 8b') for generating the second discrete-level optical signal (9b, 9b') by binary modulation of the second e/o-conversion element (8b, 8b') at the advanced bit rate (b₂), an optical amplitude (P₁) of the first discrete-level signal (9a, 9a') being larger than an optical amplitude (P₂) of the second discrete-level signal (9b, 9b') so that the sum signal (22) comprises an amplitude range in which only transitions generated by the first discrete-level optical signal (9a, 9a') are present.

13. PON according to claim 12, wherein the OLT (4b) comprises the second e/o-conversion element (8b) and is arranged as an in-line element in a fiber line (17) from a legacy OLT (4a) which comprises the first e/o-conversion element (8a), the OLT (4b) further comprising a control unit (20) for adjusting the optical amplitude ratio of the first and second discrete-level optical signals (9a, 9b) so that the sum signal (22) comprises an amplitude range in which only transitions generated by the first discrete-level optical signal (9a, 9a') are present.

## Patentansprüche

1. Verfahren zum Durchführen einer optischen Übertragung in einem passiven optischen Netzwerk, PON (1), wobei das Verfahren umfasst:
Übertragen eines optischen Wellenlängenmultiplexsignals (11, 11'), welches ein erstes pegeldiskretes optisches Signal (9a) mit einer ersten Wellenlänge (λ₁, λ₃) bei einer traditionellen Bitrate (b₁) und ein zweites pegeldiskretes optisches Signal (9b) mit einer zweiten Wellenlänge (λ₂, λ₄) bei einer erweiterten Bitrate (b₂) umfasst, durch das PON (1),
**gekennzeichnet durch**
Einspeisen des optischen Wellenlängenmultiplexsignals (11, 11') mit dem ersten und dem zweiten pegeldiskreten optischen Signal (9a, 9b; 9a', 9b') in ein O/E-Wandlerelement (21, 21') eines traditionellen Empfängers (13a, 13a') des PON (1), wobei die optische Leistung (P₁) des ersten pegeldiskreten optischen Signals (9a, 9a') höher als die optische Leistung (P₂) des zweiten pegeldiskreten optischen Signals (9b, 9b') gewählt wird, so dass für die Wiederherstellung der in dem ersten pegeldiskreten optischen Signal (9a, 9a') in dem traditionellen Empfänger (13a, 13a') enthaltenen Daten das Summensignal (22) einen Amplitudenbereich umfasst, in welchem nur von dem ersten pegeldiskreten optischen Signal (9a, 9a') erzeugte Übergänge vorhanden sind.

2. Verfahren nach Anspruch 1, weiterhin umfassend: Wiederherstellen von in dem zweiten pegeldiskreten optischen Signal (9b, 9b') enthaltenen Daten aus dem optischen Wellenlängenmultiplexsignal (11, 11') in einem erweiterten Empfänger (13b, 13b') durch Blockieren des ersten pegeldiskreten optischen Signals (9a, 9a') unter Verwendung eines wellenlängenselektiven optischen Filters (12, 12').

3. Verfahren nach Anspruch 2, wobei der traditionelle Empfänger (13a) in einem traditionellen optischen Netzwerkabschluss, ONT, (2.1) angeordnet ist, um die in dem von einem optischen Leitungsabschluss, OLT, (4) übertragenen ersten pegeldiskreten optischen Signal (9a) enthaltenen Daten wiederherzustellen, und wobei der erweiterte Empfänger (13b) in einem erweiterten ONT (3) angeordnet ist, um die in dem von dem OLT (4) übertragenen zweiten pegeldiskreten optischen Signal (9b) enthaltenen Daten wiederherzustellen.

4. Verfahren nach Anspruch 2, wobei der traditionelle Empfänger (13a') in dem OLT (4) angeordnet ist, um in dem von einem traditionellen ONT (2.1) übertragenen ersten pegeldiskreten optischen Signal (9a') enthaltene Daten wiederherzustellen, und wobei der erweiterte Empfänger (13b') ebenfalls in dem OLT (4) angeordnet ist, um in dem von einem erweiterten ONT (3) übertragenen zweiten pegeldiskreten optischen Signal (9b') enthaltene Daten wiederherzustellen.

5. Verfahren nach Anspruch 1, wobei die ersten Wellenlänge (λ₁) in einem traditionellen Wellenlängenbereich zwischen 1480 nm und 1500 nm gewählt wird, und wobei die zweite Wellenlänge (λ₂) in einem erweiterten Wellenlängenbereich zwischen 1574 nm und 1580 nm gewählt wird.

6. Verfahren nach Anspruch 1, weiterhin umfassend:
Erzeugen des ersten pegeldiskreten optischen Signals (9a, 9a') durch Durchführen einer binären Modulation eines ersten E/O-Wandlerelements (8a, 8a') bei der traditionellen Bitrate (b₁), und
Erzeugen des zweiten pegeldiskreten optischen Signals (9b, 9b') durch Durchführen einer binären Modulation eines zweiten E/O-Wandlerelements (8b, 8b') bei der erweiterten Bitrate (b₂), wobei eine optische Amplitude (P₁) des ersten pegeldiskreten optischen Signals (9a, 9a') größer als eine optische Amplitude (P₂) des zweiten pegeldiskreten optischen Signals (9b, 9b') gewählt wird, so dass das Summensignal (22) einen Amplitudenbereich umfasst, in welchem nur von dem ersten pegeldiskreten optischen Signal (9a, 9a') erzeugte Übergänge vorhanden sind.

7. Passives optisches Netzwerk, PON (1) mit einer baumartigen Struktur, umfassend:
Einen optischen Multiplexer (10, 5) zum Erzeugen eines optischen Wellenlängenmultiplexsignals (11, 11') durch Kombinieren eines ersten pegeldiskreten optischen Signals (9a, 9a') bei einer ersten Wellenlänge (λ₁, λ₃) mit einer traditionellen Bitrate (b₁) und eines zweiten pegeldiskreten optischen Signals (9b) bei einer zweiten Wellenlänge (λ₂, λ₄) mit einer erweiterten Bitrate (b2),
mindestens einen traditionellen Empfänger (13a, 13a'), welcher dazu ausgelegt ist, in dem ersten pegeldiskreten Signal (9a, 9a') enthaltene Daten wiederherzustellen, und
mindestens einen erweiterten Empfänger (13b, 13b'), welcher dazu ausgelegt ist, in dem zweiten pegeldiskreten Signal (9b, 9b') enthaltene Daten wiederherzustellen,
**dadurch gekennzeichnet, dass**
der traditionelle Empfänger (13a, 13a') dazu ausgelegt ist, das optische Wellenlängenmultiplexsignal (11, 11'), welches das erste und das zweite pegeldiskrete optische Signal (9a, 9b; 9a', 9b') enthält, in ein O/E-Wandlerelement (21, 21') einzuspeisen, wobei eine optische Leistung (P₁) des ersten pegeldiskreten optischen Signals (9a, 9a') höher als eine optische Leistung (P₂) des zweiten pegeldiskreten optischen Signals (9b, 9b') ausgewählt wird, so dass für die Wiederherstellung der in dem ersten pegeldiskreten optischen Signal (9a, 9a') in dem traditionellen Empfänger (13a, 13a') enthaltenen Daten das Summensignal (22) einen Amplitudenbereich umfasst, in welchem nur von dem ersten pegeldiskreten optischen Signal (9a, 9a') erzeugte Übergänge vorhanden sind.

8. PON nach Anspruch 7, wobei der traditionelle Empfänger (13a, 13a') weiterhin eine Taktdatenwiederherstellungseinheit (23, 23') umfasst, welche bei der traditionellen Bitrate (b₁) betrieben wird, um die in dem ersten pegeldiskreten Signal (9a, 9a') enthaltenen Daten wiederherzustellen.

9. PON nach Anspruch 7, weiterhin umfassend einen wellenlängenselektiven optischen Filter (12, 12') zum Blockieren des ersten pegeldiskreten optischen Signals (9a, 9a'), bevor die in dem zweiten pegeldiskreten optischen Signal (9b, 9b') in dem erweiterten Empfänger (13b) enthalten Daten wiederhergestellt werden.

10. PON nach Anspruch 7, wobei der traditionelle Empfänger (13a) in einem traditionellen optischen Netzwerkabschluss, ONT, (2.1) angeordnet ist, um in dem von einem optischen Leitungsabschluss, OLT, (4) übertragenen ersten pegeldiskreten optischen Signal (9a) enthaltene Daten wiederherzustellen, und wobei der erweiterte Empfänger (13b) in einem erweiterten ONT (3) angeordnet ist, um in dem von dem OLT (4) übertragenen zweiten pegeldiskreten Signal (9b) enthaltene Daten wiederherzustellen.

11. PON nach Anspruch 7, wobei der traditionelle Empfänger (13a') in dem OLT (4) angeordnet ist, um in dem von einem traditionellen ONT (2.1) übertragenen ersten pegeldiskreten optischen Signal (9a') enthaltene Daten wiederherzustellen, und wobei der erweiterte Empfänger (13b') ebenfalls in dem OLT (4) angeordnet ist, um in dem von einem erweiterten ONT (3) übertragenen zweiten pegeldiskreten optischen Signal (9b') enthaltene Daten wiederherzustellen.

12. PON nach Anspruch 7, weiterhin umfassend:
Ein erstes E/O-Wandlerelement (8a, 8a') zum Erzeugen des ersten pegeldiskreten optischen Signals (9a, 9a') durch binäre Modulation des ersten E/O-Wandlerelements (8a, 8a') bei der traditionellen Bitrate (b₁), und
ein zweites E/O-Wandlerelement (8b, 8b') zum Erzeugen des zweiten pegeldiskreten optischen Signals (9b, 9b') durch binäre Modulation des zweiten E/O-Wandlerelements (8b, 8b') bei der erweiterten Bitrate (b₂), wobei eine optische Amplitude (P₁) des ersten pegeldiskreten optischen Signals (9a, 9a') größer als eine optische Amplitude (P₂) des zweiten pegeldiskreten optischen Signals (9b, 9b') ist, so dass das Summensignal (22) einen Amplitudenbereich umfasst, in welchem nur von dem ersten pegeldiskreten optischen Signal (9a, 9a') erzeugte Übergänge vorhanden sind.

13. PON nach Anspruch 12, wobei der OLT (4b) das zweite E/O-Wandlerelement (8b) umfasst und als ein Inline-Element in einer Faserleitung (17) von einem traditionellen OLT (4a), welcher das erste E/O-Wandlerelement (8a) umfasst, angeordnet ist, wobei der OLT (4b) weiterhin eine Steuereinheit (20) zum Anpassen des optischen Amplitudenverhältnisses des ersten und des zweiten pegeldiskreten optischen Signals (9a, 9b) umfasst, so dass das Summensignal (22) einen Amplitudenbereich umfasst, in welchem nur von dem ersten pegeldiskreten optischen Signal (9a, 9a') erzeugte Übergänge vorhanden sind.

## Revendications

1. Procédé pour réaliser une transmission optique dans un réseau optique passif, PON (1), le procédé comprenant:
transmission d'un signal optique multiplexé en longueur d'onde (11, 11') comprenant un premier signal optique à niveau discret (9a) ayant une première longueur d'onde (λ₁, λ₃) à un débit binaire hérité (b₁) et un deuxième signal optique à niveau discret (9b) ayant une deuxième longueur d'onde (λ₂, λ₄) à un débit binaire avancé (b₂) par le biais du PON (1),
**caractérisé par** l'étape suivante
acheminement du signal optique multiplexé en longueur d'onde (11, 11') comprenant le premier et le deuxième signal optiques à niveau discret (9a, 9b ; 9a', 9b') à un élément de conversion ole (21, 21') d'un récepteur hérité (13a, 13a') du PON (1), la puissance optique (P₁) du premier signal optique à niveau discret (9a, 9a') étant choisie supérieure à la puissance optique (P₂) du deuxième signal optique à niveau discret (9b, 9b') de sorte que pour récupérer les données contenues dans le premier signal optique à niveau discret (9a, 9a') dans le récepteur hérité (13a, 13a'), le signal total (22) comprend une plage d'amplitudes dans laquelle seules sont présentes les transitions générées par le premier signal optique à niveau discret (9a, 9a').

2. Procédé selon la revendication 1, comprenant en outre : récupération des données contenues dans le deuxième signal optique à niveau discret (9b, 9b') à partir du signal optique multiplexé en longueur d'onde (11, 11') dans un récepteur avancé (13b, 13b') par blocage du premier signal optique à niveau discret (9a, 9a') en utilisant un filtre optique à sélectivité de longueur d'onde (12, 12').

3. Procédé selon la revendication 2, dans lequel le récepteur hérité (13a) est disposé dans une terminaison de réseau optique héritée, ONT, (2.1) pour récupérer les données contenues dans le premier signal optique à niveau discret (9a) émis depuis une terminaison de ligne optique, OLT, (4), et le récepteur avancé (13b) est disposé dans une ONT avancée (3) pour récupérer les données contenues dans le deuxième signal optique à niveau discret (9b) émis depuis l'OLT (4).

4. Procédé selon la revendication 2, dans lequel le récepteur hérité (13a') est disposé dans l'OLT (4) pour récupérer les données contenues dans le premier signal optique à niveau discret (9a') émis depuis une ONT héritée (2.1), et le récepteur avancé (13b') est également disposé dans l'OLT (4) pour récupérer les données contenues dans le deuxième signal optique à niveau discret (9b') émis depuis une ONT avancée (3).

5. Procédé selon la revendication 1, dans lequel la première longueur d'onde (λ₁) est choisie dans une plage de longueurs d'onde héritée comprise entre 1480 nm et 1500 nm et la deuxième longueur d'onde (λ₂) est choisie dans une plage de longueurs d'onde avancée comprise entre 1574 nm et 1580 nm.

6. Procédé selon la revendication 1, comprenant en outre :
génération du premier signal optique à niveau discret (9a, 9a') en effectuant une modulation binaire d'un premier élément de conversion e/o (8a, 8a') au débit binaire hérité (b₁), et
génération du deuxième signal optique à niveau discret (9b, 9b') en effectuant une modulation binaire d'un deuxième élément de conversion e/o (8b, 8b') au débit binaire avancé (b₂), une amplitude optique (P₁) du premier signal optique à niveau discret (9a, 9a') étant choisi supérieure à une amplitude optique (P₂) du deuxième signal optique à niveau discret (9b, 9b') de sorte que le signal total (22) comprend une plage d'amplitudes dans laquelle seules sont présentes les transitions générées par le premier signal optique à niveau discret (9a, 9a').

7. Réseau optique passif, PON (1), comprenant une structure de type arborescence, comprenant :
un multiplexeur optique (10, 5) pour générer un signal optique multiplexé en longueur d'onde (11, 11') en combinant un premier signal optique à niveau discret (9a, 9a') à une première longueur d'onde (λ₁, λ₃) ayant un débit binaire hérité (b₁) et un deuxième signal optique à niveau discret (9b) à une deuxième longueur d'onde (λ₁, λ₃) ayant un débit binaire avancé (b₂),
au moins un récepteur hérité (13a, 13a') adapté pour récupérer les données contenues dans le premier signal optique à niveau discret (9a, 9a'), et
au moins un récepteur avancé (13b, 13b') adapté pour récupérer les données contenues dans le deuxième signal optique à niveau discret (9b, 9b'),
**caractérisé en ce que**
le récepteur hérité (13, 13') est adapté pour acheminer le signal optique multiplexé en longueur d'onde (11, 11') comprenant le premier et le deuxième signal optiques à niveau discret (9a, 9b ; 9a', 9b') à un élément de conversion ole (21, 21'), une puissance optique (P₁) du premier signal optique à niveau discret (9a, 9a') étant choisie supérieure à une puissance optique (P₂) du deuxième signal optique à niveau discret (9b, 9b') de sorte que pour récupérer les données contenues dans le premier signal optique à niveau discret (9a, 9a') dans le récepteur hérité (13a, 13a'), le signal total (22) comprend une plage d'amplitudes dans laquelle seules sont présentes les transitions générées par le premier signal optique à niveau discret (9a, 9a').

8. PON selon la revendication 7, dans lequel le récepteur hérité (13a, 13a') comprend en outre une unité de récupération de données d'horloge (23, 23') fonctionnant au débit binaire hérité (b₁) pour récupérer les données contenues dans le premier signal à niveau discret (9a, 9a').

9. PON selon la revendication 7, comprenant en outre un filtre optique à sélectivité de longueur d'onde (12, 12') pour bloquer le premier signal optique à niveau discret (9a, 9a') avant de récupérer les données contenues dans le deuxième signal optique à niveau discret (9b, 9b') dans le récepteur avancé (13b).

10. PON selon la revendication 7, dans lequel le récepteur hérité (13a) est disposé dans une terminaison de réseau optique héritée, ONT, (2.1) pour récupérer les données contenues dans le premier signal optique à niveau discret (9a) émis depuis une terminaison de ligne optique, OLT, (4), et le récepteur avancé (13b) est disposé dans une ONT avancée (3) pour récupérer les données contenues dans le deuxième signal optique à niveau discret (9b) émis depuis l'OLT (4).

11. PON selon la revendication 7, dans lequel le récepteur hérité (13a') est disposé dans l'OLT (4) pour récupérer les données contenues dans le premier signal optique à niveau discret (9a') émis depuis une ONT héritée (2.1), et le récepteur avancé (13b') est également disposé dans l'OLT (4) pour récupérer les données contenues dans le deuxième signal optique à niveau discret (9b') émis depuis une ONT avancée (3).

12. PON selon la revendication 7, comprenant en outre :
un premier élément de conversion e/o (8a, 8a') pour générer le premier signal optique à niveau discret (9a, 9a') par modulation binaire du premier élément de conversion e/o (8a, 8a') au débit binaire hérité (b₁), et
un deuxième élément de conversion e/o (8b, 8b') pour générer le deuxième signal optique à niveau discret (9b, 9b') par modulation binaire du deuxième élément de conversion e/o (8b, 8b') au débit binaire avancé (b₂), une amplitude optique (P₁) du premier signal à niveau discret (9a, 9a') étant supérieure à une amplitude optique (P₂) du deuxième signal à niveau discret (9b, 9b') de sorte que le signal total (22) comprend une plage d'amplitudes dans laquelle seules sont présentes les transitions générées par le premier signal optique à niveau discret (9a, 9a').

13. PON selon la revendication 12, dans lequel l'OLT (4b) comprend le deuxième élément de conversion e/o (8b) et est disposée comme un élément en ligne dans une ligne de fibres (17) depuis une OLT héritée (4a) qui comprend le premier élément de conversion e/o (8a), l'OLT (4b) comprenant en outre une unité de commande (20) pour ajuster le rapport d'amplitudes optiques entre le premier et le deuxième signal optiques à niveau discret (9a, 9b) de sorte que le signal total (22) comprend une plage d'amplitudes dans laquelle seules sont présentes les transitions générées par le premier signal optique à niveau discret (9a, 9a').
